# EUROPÄISCHE PATENTANMELDUNG

(11) **EP 1 598 636 A1**
(43) Veröffentlichungstag der Anmeldung: **23.11.2005**
(21) Anmeldenummer: 05010565.9
(22) Anmeldetag: 15.05.2005
(51) Int. Cl.: G01B 11/02, G01B 11/28, G01C 11/00

(54) **Verfahren zur Vermessung von Längen und Flächen auf dreidimensionalen, beliebig gekrümmten Oberflächen**

(30) Priorität: 18.05.2004 AT 8732004
(71) Anmelder: experten only Kirchebner & Pointner OEG, 4040 Linz (AT)
(72) Erfinder: Kirchebner, Andreas, Dr., 4040 Linz (AT)

(57) **Zusammenfassung**

Die Erfindung betrifft ein Verfahren zur Vermessung von Strukturen auf dreidimensionalen, beliebig gekrümmten Oberflächen. Dabei wird neben der eigentlichen Aufnahme der Oberfläche eine zweite, sogenannte Kalibrieraufnahme von der Oberfläche, wobei dabei auf der Oberfläche zweidimensionale Objekte bekannter Abmessung verteilt sind, angefertigt. Für jedes Pixel dieser Kalibrieraufnahme können die i.A. unterschiedlichen und zudem richtungsabhängigen Faktoren von Pixelgröße zu jeweiliger Länge auf der Oberfläche bestimmt werden. Anschließend wird eine Aufnahme der Oberfläche *ohne* aufgebrachte 2D-Objekte aus unveränderter Kameraposition angefertigt. Die aus der Kalibrieraufnahme bestimmten Faktoren von Pixelgröße zu wahrer Länge werden sodann auf die entsprechenden Pixel der Aufnahme *ohne* 2D-Objekte, auf welcher daher die interessierenden Strukturen sichtbar sind, übertragen, wodurch eine Berechnung von wahren Längen bzw. Flächen der Strukturen in z.B. Millimeter bzw. Quadratmillimeter möglich wird.

## Beschreibung

**Das technische Anwendungsgebiet** des Verfahrens liegt in der Vermessung von Längen und Flächen auf dreidimensionalen, beliebig gekrümmten Oberflächen, im weiteren kurz **3D-Oberflächen** genannt, mit einer Aufnahmekamera, im weiteren kurz als **3D-Kamera** bezeichnet. Im speziellen kann es dazu dienen, das Ausmaß flächenartiger Beschädigungen auf 3D-Oberflächen zu bestimmen. Ein Beispiel für diesen Anwendungsfall wäre die Vermessung von Beschädigungen auf einer Automobilaußenhaut im Feldversuch, wo komplizierte Messaufbauten von Nachteil sind.

Die Vermessung der 3D-Form von Oberflächen wird häufig mit Streifen-Triangulationsverfahren, bei welchen Streifen auf die Oberfläche projiziert werden, durchgeführt. Diese machen jedoch aufwendige Messaufbauten, die einen Projektor zum Projizieren der Streifen umfassen und die genaue Vermessung des Aufbaus, notwendig **(DE 199-49275, DE 38-31630, DE 36-32450)**.

Ein anderes Verfahren, nämlich jenes der Photogrammetrie erfordert die Aufnahme der Oberfläche aus unterschiedlichen Blickwinkeln und die genaue Bestimmung der Positionen, aus welchen diese Aufnahmen angefertigt wurden. Darüber hinaus müssen bei der Berechnung der 3D-Form über das Verfahren der Photogrammetrie gewisse Kenntnisse über die verwendete Kamera - z.B. Abmessung der Pixel bei Verwendung einer Digitalkamera und die an der Kamera eingestellte Brennweite - genau bekannt sein. Aufgrund dieser Erfordernisse wird bei diesem Verfahren zumeist mit fest vorgegebenem Kamerasystem und fixer Brennweite gearbeitet.

Wie aus der Beschreibung des technischen Anwendungsgebietes hervorgeht, dient gegenständliches Verfahren jedoch nicht der vollständigen Erfassung der 3D-Form von Oberflächen, sondern der bloßen Vermessung von sich auf diesen Oberflächen befindlichen, also deren 3D-Verlauf folgenden, Strukturen. So ist es für die technische Anwendung z.B. nicht wesentlich, ob eine Oberfläche, auf welcher sich die zu vermessenden Strukturen befinden, z.B. in Richtung zur 3D-Kamera, oder von dieser weg gewölbt ist. Aus der Einschränkung des Verfahrens auf diesen Sonderfall ergeben sich dessen Vorteile. Der für das Verfahren benötigte Aufbau besteht nämlich nur aus einer 3D-Kamera in beliebiger Position, welche nicht vermessen werden muss, und aus auf der 3D-Oberfläche aufgebrachten, 2D-Objekten bekannter Abmessung(en).

Die zur Anwendung der Photogrammetrie notwendigen Kenntnisse über die verwendete Kamera sind ebenfalls nicht erforderlich: Der Anwender ist völlig frei in der Wahl der Kamera und Wahl der Brennweite. Dies ermöglicht zum einen den sofortigen Umstieg auf ein anderes, für die jeweilige Anwendung möglicherweise besser geeignetes Kamerasystem, zum anderen die einfache Wahl einer für den jeweiligen Anwendungsfall besser geeigneten Brennweite, also die einfache Anpassung des Abbildungsmaßstabes auf die Größe der zu vermessenden Oberfläche; es kann mit Kameras mit Zoomfunktion gearbeitet werden. Das vorgestellte Verfahren bietet gegenüber bestehenden Verfahren zum Vermessen von 3D-Oberflächen also ein hohes Maß an Flexibilität.

Die Patentschrift **JP60263804** stellt ebenfalls ein sehr einfaches Verfahren zum Bestimmen von unbekannten Längen oder Flächen auf Oberflächen vor, welches in seiner Anwendbarkeit jedoch auf **plane, normal zu einer Kamera ausgerichteten** Oberflächen eingeschränkt ist. Die Einschränkung des Verfahrens auf plane, normal zur Kamera ausgerichtete Oberflächen folgt daraus, dass bei diesem Verfahren anhand eines, an beliebigem Ort der Fläche befindlichen 2D-Objektes die gesamte Fläche kalibriert werden soll. I.A. wird also ein im Bereich des Punktes (X1,Y1) der Fläche befmdliches 2D-Objekt dazu herangezogen, den Punkt (X2,Y2) ≠ (X1,Y1) zu kalibrieren. Dieser weist bei gekrümmten Flächen i.A. jedoch eine andere Gegenstandsweite, andere Neigung und Krümmung bzgl. Kamera auf, als der Punkt (X1,Y1) der Fläche, was naturgemäß zu einer falschen Kalibrierung im Punkt (X1,Y1) führt. Das Verfahren weist also keinen "lokalen Charakter" auf, wie es jedoch zur Vermessung von Längen und Flächen auf beliebig gekrümmten Oberflächen unerlässlich ist, es wird für die gesamte Fläche ein einziger, globaler Kalibrierfaktor bestimmt.

### Die durch das gegenständliche Verfahren zu lösende Aufgabe stellt sich wie folgt:

Erstellt man von einer 3D-Oberfläche mit einer 3D-Kamera, welche z.B. eine Digitalkamera sein kann, eine Aufnahme und möchte anhand dieser Aufnahme die wahren Abmessungen von auf der 3D-Oberfläche befindlichen Strukturen bestimmen, so ist man mit dem Problem konfrontiert, dass bei der Umrechnung von Pixel auf wahre Längen i.A. alle Bildpunkte (Pixel) der Aufnahme unterschiedliche und zudem richtungsabhängige Verhältnisse von wahrer Länge auf der Oberfläche zu Pixelgröße, im folgenden kurz **Skalierungsfaktoren** genannt, aufweisen. Die Orts- und

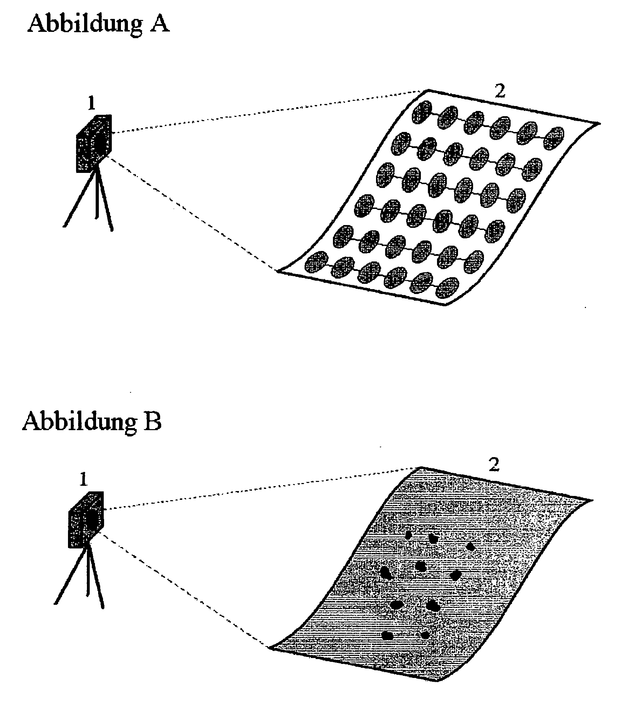

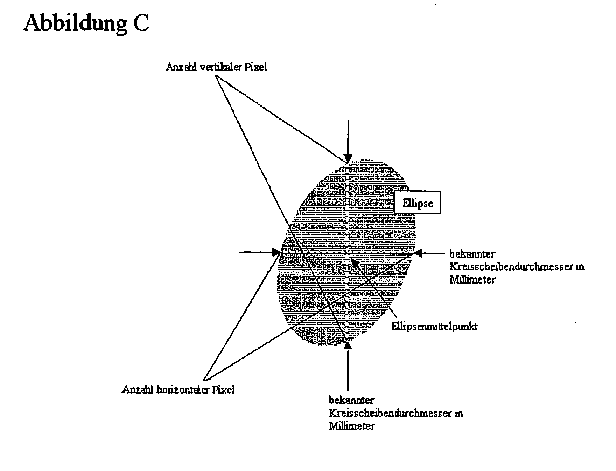

Richtungsabhängigkeit dieser Skalierungsfaktoren ergibt sich aus der i. A. unterschiedlichen Gegenstandsweite, welche gedachte (infinitesimal) kleine Flächensegmente der Oberfläche zur 3D-Kamera aufweisen, aus deren beliebiger Neigung zur optischen Achse der 3D-Kamera und letztlich durch die geometrischen Verzerrungen in der Abbildung der Oberfläche durch die 3D-Kamera selbst. Gesucht ist also jenes Feld, im weiteren **Skalierungsfeld** genannt, welches für jeden Bildpunkt (Pixel) der Aufnahme den für jede interessierende Richtung benötigten Skalierungsfaktor bereit hält. Ist für die weitere Berechnung nur eine Richtung interessant, so handelt es sich bei dem Feld um ein Skalarfeld, sind mehrere Richtungen von Interesse, so handelt es sich um ein Vektorfeld. Das Verfahren ermöglicht die Bestimmung dieses Skalierungsfeldes aus einer Aufnahme der Oberfläche, im weiteren **Skalierungsaufnahme** genannt und folglich die Berechnung von Längen und Flächen auf der 3D-Oberfläche.

Bei der Erstellung der Skalierungsaufnahme werden auf der Oberfläche zweidimensionale Objekte bekannter Abmessung, zweckmäßigerweise können diese in einem Raster angeordnet sein, aufgebracht und diese aus einer beliebigen Kameraposition, welche jedoch zweckmäßigerweise so gewählt wird, dass die Oberfläche bestmöglich erfasst werden kann, photographiert. Die zweidimensionalen Objekte (der aus diesen gebildete Raster) müssen (muss) der lokal vorliegenden Krümmung der Oberfläche möglichst gut folgen. Die Dimension der verwendeten Objekte ist unter Berücksichtigung der zu untersuchenden Oberfläche zu wählen: Für Oberflächen mit schwachen Krümmungen eignen sich größere Objekte besser, da die Erkennung der Strukturen immer mit einer gewissen Ungenauigkeit behaftet ist und so bei der Berechnung der Skalierungsfaktoren aus einer Photographie größerer Objekte, eine höhere Genauigkeit erzielt werden kann. Für Oberflächen, welche stärkere Krümmungen aufweisen, eignen sich wiederum kleinere Objekte besser, da sie ein Skalierungsfeld höherer Ortsauflösung liefern können. Eine Kombination aus voneinander unterscheidbaren, unterschiedlich großen Objekten ist ebenfalls denkbar.

Die Art, wie die Objekte aufgebracht werden, ist ebenfalls unter Berücksichtigung der jeweiligen 3D-Oberfläche vorzunehmen: Für Flächen, welche im wesentlichen nur in einer Richtung gekrümmt sind, können die Strukturen mittels Folie auf der Fläche angebracht werden. Für Flächen, welche mäßige Krümmungen in mehr als nur einer Richtung aufweisen (z.B. Automobilaußenhaut) können die Objekte auf einzelnen Streifen nebeneinander auf der 3D-Fläche angeordnet werden und für Flächen, welche in mehreren Richtungen sehr stark gekrümmt sind, können die 2D-Objekte einzeln auf der Oberfläche verteilt werden.

Nach Erstellung der Skalierungsaufnahme werden die zweidimensionalen Objekte (der aus diesen gebildete Raster) von der Oberfläche entfernt und eine weitere Aufnahme von der Oberfläche angefertigt. Dabei darf die Position der 3D-Kamera bezüglich der interessierenden Oberfläche nicht verändert werden. Die Skalierungsaufnahme liefert nun das benötigte Skalierungsfeld für die Aufnahme *ohne* störende Skalierungsobjekte, auf welcher die zu vermessenden Strukturen sichtbar sind und deren Abmessungen nun berechnet werden können.

Das Verfahren soll anhand eines Beispiels verdeutlicht werden. Aus diesem Beispiel soll jedoch keine Einschränkung, speziell die verwendeten Strukturen, die Art der Anordnung der Strukturen, also ob diese in einem Raster angeordnet sind oder nicht, sowie die Methode des Aufbringens der Strukturen folgen:

Gegeben sei eine beliebig gekrümmte Oberfläche mit flächenartigen Beschädigungen. Um das Ausmaß an Beschädigung quantifizieren zu können, benötigt man für jedes betroffene Pixel die Information, welcher Länge auf der 3D-Oberfläche die Kantenlängen des Pixels in horizontaler und vertikaler Richtung in z.B. Millimetern entspricht, d.h. welche Kantenlängen würde das Pixel auf der 3D-Oberfläche aufweisen, würde man es auf die 3D-Oberfläche zurück abbilden.
Auf **Abbildung A** ist die Anordnung zur Erstellung der Skalierungsaufnahme sichtbar: Die auf einem Stativ befestigte 3D-Kamera (1) und die beliebig gekrümmte 3D-Oberfläche mit einer aufgebrachten Folie, auf welcher sich ein Raster aus Kreisscheiben mit bekanntem Radius (2) befindet. Wie in Abbildung A zu sehen, können beispielsweise jeweils benachbarte Kreisscheiben des Rasters in einer Richtung durch Linien verbunden werden. Dies kann für die Auswertung der Skalierungsaufnahme mittels Computerprogramm hilfreich sein. Die Position der 3D-Kamera wird zweckmäßigerweise derart gewählt, dass der gewünschte Ausschnitt der 3D-Fläche möglichst gut erfasst werden kann.
Aus der Skalierungsaufnahme müssen nun für die horizontale und vertikale Kante der einzelnen Pixel deren entsprechende Länge auf der 3D-Oberfläche, also die inversen Skalierungsfaktoren Länge/Pixel, berechnet werden. Dies kann für die in diesem Beispiel verwendeten Kreisscheiben z.B. so durchgeführt werden:

Mittels digitaler Bilderkennung werden die einzelnen Kreisscheiben, welche in der Skalierungsaufnahme i.A. als Ellipsen erscheinen, erkannt und deren Mittelpunkte z.B. aus dem Flächenschwerpunkt bestimmt (siehe Abbildung C).
Anschließend wird von diesem Mittelpunkt ausgehend die Anzahl der Pixel bis zum oberen und unteren Ellipsenrand bestimmt (siehe Abbildung C). Der bekannte Kreisscheibendurchmesser wird dann durch die Anzahl dieser Pixel dividiert und das Ergebnis ist der über die vertikale Erstreckung der Ellipse gemittelte, vertikale inverse Skalierungsfaktor (Länge [mm]/Pixel). Analoges gilt für die Berechnung in horizontaler Richtung. Letztlich erhält man so für jedes Ellipsenmittelpunktpixel ein Wertepaar aus horizontalem und vertikalem, inversem Skalierungsfaktor in Millimeter/Pixel.
Die in **Abbildung A** - und natürlich auch in der entsprechenden Skalierungsaufnahme - ersichtliche Verbindungslinie kann nun dazu verwendet werden, die in horizontaler Richtung jeweils benachbarten Ellipsen bzw. deren Ellipsenmittelpunktspixel zu bestimmen. Für alle Pixel, die auf solch einer Verbindungslinie zwischen zwei jeweils benachbarten Ellipsenmittelpunktspixel liegen, können im nächsten Schritt die Wertepaare aus horizontalem und vertikalem, inversem Skalierungsfaktor unter Verwendung kubischer Splines interpoliert werden. Diese Splines dienen in weiterer Folge als Stützstellen für die Interpolation in vertikaler Richtung - wiederum durch kubische Splines.
Letztlich ist es also möglich, für alle Pixel innerhalb des Kreisscheibenrasters die Wertepaare aus horizontalem und vertikalem, inversem Skalierungsfaktor in Millimeter/Pixel zu bestimmen.

In **Abbildung B** ist der Aufbau ohne Kreisscheibenraster zu sehen. Dabei befindet sich die 3D-Kamera (1) in unveränderter Position bzgl. der interessierenden Oberfläche (2). Es wird nun eine weitere Photographie angefertigt, auf der die zu vermessenden Strukturen sichtbar sind.
Als nächstes werden die Wertepaare aus horizontalem und vertikalem, inversem Skalierungsfaktor aus der Skalierungsaufnahme den entsprechenden Pixel in der Aufnahme der Oberfläche zugewiesen, welche ohne Raster angefertigt wurde.
Im letzten Schritt kann nun für jedes der Pixel, welches Teil eines beschädigten Bereiches ist, die Fläche in Quadratmillimeter auf der 3D-Oberfläche bestimmt und somit die Gesamtfläche aus den einzelnen Pixelflächen aufsummiert werden.

Anhand der inversen horizontalen und vertikalen Skalierungsfaktoren können darüber hinaus auch Längen in Millimeter in horizontaler und vertikaler Richtung bestimmt werden. Wollte man Längen in anderen Richtungen bestimmen, so sind in Analogie die inversen Skalierungsfaktoren in den entsprechenden Richtungen zu bestimmen.

## Patentansprüche

1. Verfahren zur Vermessung von Längen und Flächen auf dreidimensionalen, beliebig gekrümmten Oberflächen, **dadurch gekennzeichnet, dass** neben der eigentlichen Photographie der Oberfläche eine Kalibrieraufnahme angefertigt wird, bei welcher auf der Oberfläche zumindest zwei zweidimensionale Objekte bekannter Abmessungen aufgebracht sind.
